(19) Europäisches Patentamt
European Patent Office
Office européen des brevets

(11) **EP 4 253 479 A1**

(12) **EUROPÄISCHE PATENTANMELDUNG**

(43) Veröffentlichungstag:
**04.10.2023 Patentblatt 2023/40**

(21) Anmeldenummer: **22165144.1**

(22) Anmeldetag: **29.03.2022**

(51) Internationale Patentklassifikation (IPC):
*C08L 77/02* (2006.01)   *C08L 77/06* (2006.01)

(52) Gemeinsame Patentklassifikation (CPC):
(C-Sets verfügbar)
**C08L 77/02; C08L 77/06**   (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **EMS-CHEMIE AG
7013 Domat/Ems (CH)**

(72) Erfinder:
• **AEPLI, Etienne
7013 Domat/EMS (CH)**
• **HOFFMANN, Botho
7013 Domat/EMS (CH)**

(74) Vertreter: **Pfenning, Meinig & Partner mbB
Patent- und Rechtsanwälte
Theresienhöhe 11a
80339 München (DE)**

(54) **POLYAMIDFORMMASSE MIT HOHER BRUCHFESTIGKEIT SOWIE HIERAUS GEBILDETE FORMTEILE**

(57) Die vorliegende Erfindung betrifft eine Polyamidformmasse mit hoher Bruchenergie sowie hieraus gebildete Formteile, die sich insbesondere für Sichtteile bei Automobilteilen oder elektronischen Geräten eignet. Die Polyamidformmasse weist neben ausgezeichneter Bruchenergie ebenso Klavierlackoptik und hohe Scheuerfestigkeit auf.

EP 4 253 479 A1

**(Forts. nächste Seite)**

(52) Gemeinsame Patentklassifikation (CPC): (Forts.)

C-Sets
**C08L 77/02, C08K 3/014, C08K 3/04,
C08L 77/06;
C08L 77/06, C08K 3/014, C08K 3/04,
C08L 77/02, C08L 77/06;
C08L 77/06, C08K 3/014, C08K 3/04, C08L 77/06**

## Beschreibung

Die vorliegende Erfindung betrifft eine Polyamidformmasse mit hoher Bruchenergie sowie hieraus gebildete Formteile, die sich insbesondere für Sichtteile bei Automobilteilen oder elektronischen Geräten eignet. Die Polyamidformmasse weist neben ausgezeichneter Bruchenergie ebenso Klavierlackoptik und hohe Scheuerfestigkeit auf.

## Stand der Technik

EP 1 930 373 A2 betrifft transparente Formkörper, die aus ausgewählten Polyamidformmassen gebildet sind, deren physikalische Eigenschaften, insbesondere deren Transparenz und deren dynamische Resistenz, derjenigen von Polycarbonat überlegen sind. Die den Formmassen zugrundeliegenden transparenten Polyamide werden aus mindestens zwei aliphatischen Diaminen und mindestens zwei aromatischen Dicarbonsäuren sowie gegebenenfalls Lactamen gebildet. Mischungen aus diesen transparenten Polyamiden mit anderen Polyamiden werden erwähnt, aber nicht in den Beispielen gearbeitet.

EP 3 336 131 A1 betrifft transparente Polyamid-Formmassen auf Basis transparenter, cycloaliphatischer Polyamide, wie sie beispielsweise als Gehäusebestandteile, im Haushaltsbereich, Sportartikelbereich oder Spielzeugbereich eingesetzt werden können, und welche eine hohe Bruchdehnung aufweisen. Die Formmassen können auch andere Polymere, insbesondere Polyamide enthalten.

EP 3 450 481 A1 betrifft Polyamid-Formmassen mit hohem Glanz und hoher Kerbschlagzähigkeit. Die Formmassen beruhen dabei auf den amorphen oder mikrokristallinen Copolyamiden 61/6T/MACMI/MACMT/PACMI/PACMT/Y oder PA 61/6T/MACMI/MACMT/Y, wobei Y für Lactame oder, $\omega$-Aminosäuren steht, die mit funktionalisierten Copolymeren aus Ethylen, Propylen und 1-Buten schlagzähmodifiziert sind. Aliphatische Polyamide als Blendkomponente werden nicht erwähnt.

EP 3 502 164 A1 betrifft Polyamid-Formmassen, die auf einer Mischung spezifischer amorpher Polyamide und spezifischer teilkristalliner Polyamide beruhen und die sich durch eine sehr gute Spannungsrissbeständigkeit und gleichzeitig durch sehr gute optische Eigenschaften, insbesondere eine hohe Lichttransmission und einen tiefen Haze, auszeichnen. Bei den teilkristallinen Polyamiden handelt es sich um langkettige, aliphatische Polyamide.

EP 3 502 191 A1 betrifft Polyamid-Formmassen, die auf einer Mischung spezifischer amorpher oder mikrokristalliner Polyamide und den teilkristallinen Polyamiden PA 616, PA 516, PA 1016 beruhen und die sich durch eine sehr gute Spannungsrissbeständigkeit und gleichzeitig durch sehr gute optische Eigenschaften auszeichnen.

EP 2 055 743 A1 beschreibt die Verwendung einer Formmasse aus einer Polyamidmischung, enthaltend ein aliphatisches Homo- oder Copolyamids und eines transparenten Homo- oder Copolyamids sowie gegebenenfalls Füll- und Verstärkungsstoffe und Additive. Die vorgeschlagene Verwendung ist die Herstellung eines Formkörpers für Trinkwasser, insbesondere eines Behälters oder einer Leitung, bei welchem bei bestimmungsgemäßer Verwendung wenigstens Bereiche der verarbeiteten Formmasse im Wesentlichen direkt dem Trinkwasser ausgesetzt sind. In den Beispielen gearbeitet wird als aliphatisches Polyamid lediglich PA12.

Rein aliphatische Polyamide, wie z.B. Polyamid 66 weisen zwar eine hohe mechanische Beständigkeit auf, sind allerdings kristallin. Die Kristallite brechen bzw. streuen das Licht, die Formmasse ist daher aufgrund des Tyndall-Effekts seidig bzw. hat ein schlieriges Aussehen. Kristalline Polyamidformmassen weisen daher eine zu niedrige Transparenz und einen zu hohen Haze auf, um hieraus optisch ansprechende und hochwertig anmutende, im verbauten Zustand sichtbare Bauteile herstellen zu können.

Bisher nicht gelöst im Stand der Technik ist somit, Polyamidformmassen bereit zu stellen, die erst nach hoher Energieaufnahme (bestimmbar anhand der Bruchenergie) ihre Formstabilität einbüßen und somit eine erhöhte Sicherheit, insbesondere bei schockartiger mechanischer Beanspruchung, gleichzeitig allerdings ein hervorragendes Erscheinungsbild aufweisen. Formteile aus derartig hergestellten Formmassen finden insbesondere als Sichtteile bei Automobilteilen oder elektronischen Geräten Anwendungen. Bevorzugt sollen die Polyamidformmassen gleichzeitig eine sogenannte Klavierlackoptik aufweisen, also den Eindruck einer in die Tiefe reichenden Schwärze gepaart mit hohem Glanz vermitteln. Weiter ist es bevorzugt, dass die Polyamidformmassen des Weiteren gleichzeitig eine hohe Stabilität gegen abrasive Einflüsse aufweisen, also scheuerfest sind.

Diese Aufgabe wird mit den erfindungsgemäßen Formmassen gemäß Anspruch 1 sowie den Formkörpern gemäß Patentanspruch 13 gelöst. Die abhängigen Patentansprüche stellen dabei vorteilhafte Weiterbildungen dar.

## Begriffsdefinitionen

## Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der DIN EN ISO-Norm 16396-1:2015 festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methylcyclohexyl)methan (auch als 3,3'-Dimethyl-4,4'-diaminodicyclohexylmethan bezeichnet, CAS-Nr. 6864-37-5), PACM für Bis(4-aminocyclohexyl)methan (auch als 4,4'-Diaminodicyclohexylmethan bezeichnet, CAS-Nr. 1761-71-3), TMDC für Bis(4-amino-3,5-dimethylcyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5), BAC für 1,4-Bis(aminomethyl)cyclohexan (CAS-Nr. 2549-93-1).

**Mengenangaben**

Die Polyamid-Formmassen gemäß der vorliegenden Erfindung enthalten die Komponenten a) bis d) oder bestehen bevorzugt ausschließlich aus den Komponenten a) bis d). Es gilt dabei die Maßgabe, dass sich die Komponenten a) bis d) in Summe auf 100 Gew.-% ergänzen. Die festgelegten Bereiche der Mengenangaben für die einzelnen Komponenten a) bis d) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten a) bis d) 100 Gew.-% ergibt.

**Amorphe oder mikrokristalline Polyamide**

Amorphe oder mikrokristalline Polyamide zeigen in der dynamischen Differenz-Kalorimetrie (engl. Differential Scanning Calorimetry, DSC) nach DIN EN ISO 11357-3 (2018) bei einer Aufheizrate von 20 K/min bevorzugt eine Schmelzwärme von maximal 25 J/g, besonders bevorzugt von maximal 22 J/g, ganz besonders bevorzugt 0 bis 20 J/g.

Mikrokristalline Polyamide besitzen neben einer Glasübergangstemperatur auch einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 88% oder mindestens 90 % und ihr Haze höchstens 3 % beträgt, gemessen nach ASTM D 1003-21 (2021).

Amorphe Polyamide weisen verglichen mit den mikrokristallinen Polyamiden keine oder nur eine sehr geringe, kaum nachweisbare Schmelzwärme, auf. Die amorphen Polyamide zeigen in der dynamischen Differenz-Kalorimetrie nach DIN EN ISO 11357-3 (2018) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie nach DIN EN ISO 11357-3 (2018) bei einer Aufheizrate von 20 K/min bevorzugt eine Schmelzwärme von mehr als 25 J/g, besonders bevorzugt von wenigstens 30 J/g, ganz besonders bevorzugt von wenigstens 35 J/g aufweisen. Eine aus teilkristallinen Polyamiden hergestellte Platte mit einer Dicke von 2 mm ist nicht transparent, d.h. ihre Lichttransmission liegt unter 88 % und/oder ihr Haze über 5 %, jeweils gemessen nach ASTM D 1003-21 (2021).

**Transparente Polyamide**

Im Sinne der vorliegenden Erfindung liegt ein transparentes Polyamid vor, wenn dessen nach ASTM D 1003-21 (2021) an Platten mit einer Dicke von 2 mm gemessene Lichttransmission mindestens 88% oder mindestens 90% und dessen Haze höchstens 5%, bevorzugt höchstens 3% beträgt. Wenn im Folgenden von transparenten Polyamiden gesprochen wird, sind stets amorphe oder mikrokristalline Polyamide gemeint, die die obigen Definitionen bezüglich Transparenz und Schmelzwärme erfüllen.

**Darstellung der Erfindung**

Die vorliegende Erfindung betrifft somit eine Polyamid-Formmasse enthaltend die folgenden Komponenten oder bevorzugt bestehend aus den folgenden Komponenten:

a)

93.0 bis 99.9 Gew.-% einer Mischung M bestehend aus
15.0 bis 50.0 Gew.-% mindestens einem Polyamid X und
50.0 bis 85.0 Gew.-% mindestens einem Polyamid Y, ausgewählt aus der Gruppe bestehend aus PA6, PA66, PA6/66, PA610, PA612, PA 614, PA 616, PA 6/12 sowie Mischungen hiervon;

b) 0.05 bis 5.0 Gew.-% Additive;

c) 0.01 bis 2.0 Gew.-% mindestens eines Farbmittels;

d) ggf. von den Komponenten a) bis c) verschiedene Zusatzstoffe;

wobei das mindestens eine Polyamid X ausgewählt ist aus der Gruppe bestehend aus Polyamiden, die zumindest die von den Monomer-Einheiten A, B, C, D und/oder E abgeleiteten, amidisch gebundenen Polyamid-Einheiten AC, BC und E, oder AC, BC, AD und BD, oder AC und E umfassen, wobei die Monomer-Einheiten A, B, C, D und E die nachfolgende Definitionen haben:

A: mindestens ein cycloaliphatisches Diamin;

B: mindestens ein acyclisch aliphatisches Diamin;

C: mindestens eine aromatische Dicarbonsäure;

D: mindestens eine aliphatische Dicarbonsäure;

E: mindestens eine $\alpha,\omega$-Aminocarbonsäure bzw. mindestens ein Lactam;

wobei die Summe der Komponenten X und Y 100 Gew.-% der Mischung M und die Summe der Komponenten a), b), c) und d) 100 Gew.-% ergeben.

Überraschenderweise wurde gefunden, dass die erfindungsgemäße Polyamidformmasse eine äußerst hohe Energieaufnahme aufweist und somit bei mechanischer Belastung z.B. durch Einwirken von Zug oder schockartiger mechanischer Beanspruchung später als aus dem Stand der Technik bekannten Polyamidzusammensetzungen versagt. Die erfindungsgemäßen Polyamidformmassen sind somit hinsichtlich ihrer Sicherheit den Zusammensetzungen aus dem Stand der Technik überlegen. Gleichzeitig weisen die Zusammensetzungen ein hervorragendes äußeres Erscheinungsbild ab und können somit für hochwertige Applikationen, wie z.B. im Verbauten Zustand sichtbare Bauteile, beispielsweise im Fahrzeuginneren, eingesetzt werden.

## Polyamidmischung

Die in der erfindungsgemäßen Polyamidformmasse enthaltene Polyamid-Mischung M enthält 15.0 bis 50.0 Gew.-% eines Polyamids X und 50.0 bis 85.0 Gew.-% eines Polyamids Y. Die Gewichtsanteile der Komponenten X und Y ergänzen sich dabei auf 100 Gew.-% der Mischung M. Bevorzugt ist der Gehalt an Polyamid X in der Mischung kleiner als der Gehalt des Polyamids Y, d.h. der Gehalt des Polyamids X ist kleiner als 50 Gew.-%, bezogen auf die Mischung. In gleicher Weise ist bevorzugt der Gehalt des Polyamids Y größer als 50 Gew.-%.

Die Polyamidmischung M besteht bevorzugt aus 15.0 bis 45.0 Gew.-%, bevorzugt aus 20.0 bis 42.0 Gew.-%, besonders bevorzugt aus 25.0 bis 38.0 Gew.-% des mindestens einen Polyamids X und einem komplementären Anteil des Polyamids Y, d.h. aus 55.0 bis 85.0 Gew.-%, bevorzugt aus 58.0 bis 80.0 Gew.-%, besonders bevorzugt aus 62.0 bis 75.0 Gew.-% des mindestens einen Polyamids Y.

## Polyamid X

Das Polyamid X ist dabei ein transparentes Polyamid, welches bevorzugt wenigstens 50 Mol-% an Monomeren mit ausschließlich aliphatischen Struktureinheiten, bezogen auf die Gesamtmenge an Monomeren im Polyamid X enthält. Polyamid X ist bevorzugt amorph oder mikrokristallin.

Bei den wenigstens 50 Mol-% an Monomeren mit ausschließlich aliphatischen Struktureinheiten kann es sich um aliphatische Diamine, aliphatische Dicarbonsäuren, aliphatische Lactame oder aliphatischen Aminocarbonsäuren handeln. Das Polyamid X setzt sich also aus wenigstens 50 Mol-% an Monomeren mit ausschließlich aliphatischen Struktureinheiten und maximal 50 Mol-% an Monomeren, die aromatische Struktureinheiten enthalten, zusammen.

Weiterhin ist bevorzugt, dass die Polyamide X transparent sind und eine Transparenz von mindestens 88% oder von mindestens 90% und einen Haze von höchstens 5%, bevorzugt von höchstens 3% aufweisen (jeweils bestimmt mit den weiter unten stehenden Messmethoden).

Gemäß einer bevorzugten Ausführungsform der vorliegenden Erfindung ist das Polyamid X amorph.

Gemäß einer weiteren bevorzugten Ausführungsform der vorliegenden Erfindung enthalten die Polyamide X mindestens ein Monomer mit aromatischen Struktureinheiten.

Bevorzugt haben die Polyamide X eine relative Viskosität, gemessen nach ISO 307:2007 in einer Lösung von 0.5 g Polymer in 100 ml m-Kresol bei 20°C, im Bereich von 1.35 bis 2.40, besonders bevorzugt von 1.40 bis 1.90 und insbesondere bevorzugt von 1.45 bis 1.80.

Beispielsweise relative Viskositäten für Polyamide, die zumindest Polyamid-Einheiten AC, BC und E aufweisen, liegen bevorzugt im Bereich von 1.50 bis 1.75, insbesondere von 1.59-1.64.

Beispielsweise relative Viskositäten für Polyamide, die zumindest Polyamid-Einheiten AC, BC, AD und BD aufweisen, liegen bevorzugt im Bereich von 1.60 bis 1.85, insbesondere von 1.70-1.75.

Beispielsweise relative Viskositäten für Polyamide, die zumindest Polyamid-Einheiten AC und E aufweisen, liegen bevorzugt im Bereich von 1.40 bis 1.65, insbesondere von 1.51-1.57.

Bevorzugt sind beim Polyamid X die Monomer-Einheiten A bis E jeweils unabhängig voneinander ausgewählt aus der Gruppe bestehend aus

A: (cycloaliphatische Diamine): Bis-(4-amino-3-methyl-cyclohexyl)-methan (MACM), Bis(4-amino-cyclohexyl)methan (PACM), Bis-(4-amino-3,5-dimethyl-cyclohexyl)-methan (TMDC) und Mischungen hiervon;

B: (acyclisch aliphatische Diamine): 1,6-Hexandiamin, 2-Methyl-1,8-Octan-diamin, 1,9-Nonandiamin, 1,10-Decandiamin, 1,12-Dodecan-diamin, bevorzugt ausgewählt sind aus 1,6-Hexandiamin und 1,10-Decandiamin;

C: (aromatische Dicarbonsäuren) sind ausgewählt aus der Gruppe bestehend aus Terephthalsäure, Isophthalsäure und Mischungen davon, bevorzugt eine Mischung aus Terephthalsäure und Isophthalsäure;

D: (aliphatische Dicarbonsäuren): Adipinsäure, Azelainsäure, 1,10-Decandisäure, 1,12-Dodecandisäure, 1,14-Tetradecandisäure, 1,16-Hexadecandisäure, Cyclohexan-1,3-dicarbonsäure, Cyclohexan-1,4-dicarbonsäure und Mischungen hiervon;

E: ($\alpha,\omega$-Aminocarbonsäuren oder die Lactame) sind ausgewählt aus der Gruppe bestehend aus $\alpha,\omega$-Aminohexansäure, $\alpha,\omega$-Aminoundecan-säure, $\alpha,\omega$-Aminododecansäure, Caprolactam, Laurinlactam sowie Mischungen daraus.

Gemäß einer weiter bevorzugten Ausführungsform umfasst die Polyamid-Einheit AC des Polyamids X mindestens zwei verschiedene, bevorzugt genau zwei verschiedene cycloaliphatische Diamine, insbesondere Bis-(4-amino-3-methylcyclohexyl)-methan (MACM) und Bis(4-aminocyclohexyl)methan (PACM).

Weiter bevorzugt beinhaltet das Polyamid X zwingend die Polyamid-Einheiten AC und BC.

Ebenso ist es bevorzugt, dass das Polyamid X keine Monomer-Einheit D beinhaltet.

Insbesondere bevorzugt enthält das Polyamid X die Polyamid-Einheiten AC, BC und E, ganz besonders bevorzugt besteht das Polyamid X aus den Polyamid-Einheiten AC, BC und E.

Weiter vorteilhaft ist, dass das Polyamid X mehr als 30 Mol %, bevorzugt mehr als 40 Mol-%, insbesondere mehr als 42 Mol-%, besonders bevorzugt im Bereich von 30 bis 50 Mol-% oder 40 bis 50 Mol-% oder 42 bis 50 Mol-% an Monomeren mit aromatischen Struktureinheiten, bezogen auf die Gesamtmenge an Monomeren, enthält.

Insbesondere ist das Polyamid X ausgewählt aus der Gruppe bestehend aus PA 6I/6T/MACMI/MACMT/PACMI/PACMT/12, PA 6I/6T/MACMI/MACMT/- MACM12/612, PA MACMI/12, PA MACMT/12, PA 10I/MACMI/MACM10/1010, PA 10T/MACMT/MACM10/1010, PA 10I/10T/MACMI/MAMT/MACM10/1010 PA MACMI/MACMT, PA MACMI/MACMT/12, PA MACMI/MACMT/MACM12, PA 6I/6T/MACMI/MACMT, PA 6I/6T/MACMI/MACMT/12, PA 6I/612/MACMI/MACM12, PA 6T/612/MACMT/MACM12, PA 6I/6T/612/- MACMI/MACMT/MACM12, PA 6I/6T/MACMI/MACMT/-PACMI/PACMT/- MACM12/PACM12 und Mischungen hiervon.

**Polyamid Y**

Polyamid Y ist mindestens ein acyclisch aliphatisches Polyamid. Die Polyamide Y sind ausgewählt aus der Gruppe bestehend aus PA6, PA66, PA6/66, PA610, PA612, PA 614, PA 616, PA 6/12 sowie Mischungen davon.

Bevorzugt haben die Polyamide Y eine relative Viskosität, gemessen nach ISO 307:2007 in einer Lösung von 1.0 g Polymer in 100 ml Schwefelsäure bei 20°C, im Bereich von 2.10 bis 3.60, besonders bevorzugt von 2.30 bis 3.50 und insbesondere bevorzugt von 2.40 bis 2.80.

Überraschenderweise lässt sich die beobachtete Verbesserung der Bruchenergie erst durch die Auswahl und Kombination spezifischer Polyamide X und Y erzielen bei gleichzeitiger Erzielung der optischen Anmutung, die eine Eignung der Formmassen für hochwertige Bauteile ermöglicht.

**Additive (b)**

Die erfindungsgemäße Formmasse enthält als Komponente b) mindestens ein Additiv, das bevorzugt ausgewählt ist aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern, Gleitmitteln, Entformungsmitteln sowie Mischungen und Kombinationen hiervon.

Der Gehalt des mindestens einen Additivs beträgt 0.05 bis 5.0 Gew.-%, bevorzugt 0.10 bis 3.0 Gew.-%, weiter bevorzugt 0.20 bis 2.5 Gew.-% und besonders bevorzugt 0.25 bis 2.3 Gew.-%, jeweils bezogen auf die Summe der Komponenten a) bis d).

Für den Fall, dass als mindestens ein Additiv ein Stabilisator eingesetzt wird, kann dieser gemäß einer bevorzugten Ausführungsform ausgewählt sein aus der folgenden Gruppe:

- Verbindungen des ein- oder zweiwertigen Kupfers, insbesondere Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren, wobei besonders bevorzugt die einwertigen Kupferverbindungen CuCl, CuBr, Cul, CuCN und $Cu_2O$, sowie die zweiwertigen Kupferverbindungen $CuCl_2$, CuSO4, CuO, Kupfer(II)acetat oder Kupfer(II)stearat sind, oder Mischungen dieser Verbindungen, wobei diese Kupfer-Verbindungen als solche oder bevorzugtermaßen in Form von Konzentraten eingesetzt werden. Dabei ist unter Konzentrat ein Polymer, vorzugsweise gleicher oder im Wesentlichen gleicher chemischer Natur wie die Polyamide X oder Y, zu verstehen, welches das Kupfersalz bzw. die Kupferverbindung in hoher Konzentration enthält (Masterbatch). Insbesondere bevorzugt werden die Kupferverbindungen in Kombination mit weiteren Metallhalogeniden, einschließlich Alkalihalogeniden, wie Nal, KI, NaBr, KBr, eingesetzt, wobei das molare Verhältnis von Metallhalogenid zu Kupfer 0.5 bis 20, bevorzugt 1 bis 10 und besonders bevorzugt 2 bis 7 beträgt;
- Stabilisatoren auf Basis sekundärer aromatischer Amine;
- Stabilisatoren auf Basis sterisch gehinderter Phenole;
- Phosphiten und Phosphoniten,
- Stabilisatoren ausgewählt aus der Gruppe bestehend aus N,N'-Oxamide, Hydroxyphenyltriazine, Hydroxyphenylbenzotriazole, Dibenzoylmethane, Aminohydroxybenzoylbenzoesäureester, Hydroxybenzophenone, Hindered Amin Light Stabilizers (HALS), sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-ditert-butylphenyl)phosphit, Diisodecylpentaerythritoldiphosphit, Bis(2,4-ditert-butylphenyl)pentaerythritoldiphosphit, Bis(2,6-di-tert-butyl-4-methylphenyl)-pentaerythritoldiphosphit, Diisodecyloxypentaerythritoldiphosphit, Bis-(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz-[d,g]-l,3,2-dioxaphosphocin, 6-Fluoro-2,4,8,10-tetra-tert-butyl-12-methyl-dibenz[d,g]-1,3,2-dioxaphosphocin, Bis-(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von Irgatec NC 66 (erhältlich von BASF) und einer Kupferstabilisierung auf Basis von Cul und Kl. Insbesondere bevorzugt wird eine Wärmestabilisierung ausschließlich auf Basis von Cul und Kl.

Gemäß einer weiteren bevorzugten Ausführungsform sind die Hitzestabilisatoren der Komponente (b) ausgewählt aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente C ausgewählt ist aus der folgenden Gruppe: Triethylenglykol bis(3-tert-butyl-4-hydroxy-5-methylphenyl)propionat, Pentaerythritol-tetrakis(3-(3,5-di-tert-butyl-4-hydroxyphenyl)propionat), N,N'-Hexamethylenbis[3-(3,5-di-t-butyl-4-hydroxyphenyl)propionamid], Tris-(2,4-di-tert-butylphenyl)phosphit, Tris-(2,4-di-tert-butylphenyl)phosphit, oder Mischungen davon.

Bevorzugte organische Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt als Komponente (D) wird eine Mischung aus 10 Gew.-Teilen einer Mischung aus Irganox 1010 (CAS 6683-19-8, phenolisches Antioxidans) und Anox 20 (CAS 6683-19-8, phenolisches Antioxidans) im Verhältnis 7:3 sowie 2 Gew.-Teile Hostanox PAR24 (CAS: 31570-04-4, Tris(2,4-ditert-butylphenyl)phosphite).

Bevorzugte UV-Stabilisatoren sind beispielsweise ausgewählt aus der Gruppe bestehend aus N-(2-Ethoxyphenyl)-N'-(2-ethylphenyl)oxamide (Tinuvin 312), 2-(4,6-Diphenyl-1,3,5-triazin-2yl)-5-hexyloxyphenol (Tinuvin 1577), 2-(4,6-Diaryl-1, 3, 5-triazin-2yl)-5-(alkoxysubstituiert)-phenol (Tinuvin 1600), 2-tert-butyl-6-(5-chlorobenzotriazol-2-yl)-4-methylphenol (Tinuvin 326), 2-(Benzo-triazol-2-yl)-4,6-bis(2-phenylpropan-2-yl)phenol (Tinuvin 234), Bis(2,2,6,6,-tetramethyl-4-piperidyl)sebacat (Tinuvin 770 DF), 2-(Hydroxyphenyl)-benzotriazol-Derivat (Tinuvin Carboprotect), 2-(Benzotriazol-2-yl)-4,6-bis(2-methylbutan-2-yl)phenol (Tinuvin 328), 2-(Benzotriazol-2-yl)-6-[[3-(benzotriazol-2-yl)-2-hydroxy-5-(2,4,4-trimethylpentan-2-yl)phenyl]methyl]-4-(2,4,4-trimethylpentan-2-yl)-phenol (Tinuvin 360), Poly[[6-[(1,1,3,3-tetra-methylbutyl)amino]-1,3,5-triazin-2,4-diyl][(2,2,6,6-tetramethyl-4-piperidinyl)-imino]-1,6-hexandiyl[(2,2,6,6-tetramethyl-4-piperidinyl)-imino]]) (Chimasorb 944 FD), 1-(4-Metoxyphenyl)-3-( 4-tert-butylphenyl)propan-1,3-dion (Parsol 1789) und Mischungen hiervon.

Eine bevorzugte Ausführungsform des Verarbeitungshilfsmittels sind Al-, Alkali-, Erdalkalisalze, Ester oder Amide von Fettsäuren mit 10 bis 44 C-Atomen und vorzugsweise mit 14 bis 44 C-Atomen, wobei die Metallionen Na, Mg, Ca und Al bevorzugt und Ca oder Mg besonders bevorzugt sind. Besonders bevorzugte Metallsalze sind Magnesiumstearat, Calciumstearat und Calcium-Montanat sowie Aluminium-Stearat. Die Fettsäuren können 1- oder 2-wertig sein. Als Beispiele seien Pelargonsäure, Palmitinsäure, Laurinsäure, Margarinsäure, Dodecandisäure, Behensäure und die besonders bevorzugten Stearinsäure, Caprinsäure sowie Montansäure (Mischung von Fettsäuren mit 30 bis 40 C-Atomen), genannt. Gemäß einer weiteren bevorzugten Ausführungsform sind die Verarbeitungshilfsmittel Calciumstearat, Glycerinmonostearat, Abril1033 oder A-CRAWAX C geeignet.

**Farbmittel (c)**

Bei Komponente c) handelt es sich um Farbmittel oder Mischungen von Farbmitteln, die geeignet sind die Polyamid-Formmasse schwarz einzufärben. Die Schwarzfärbung sowie das optische Erscheinungsbild erfolgt anhand einer visuellen Beurteilung. Farbmittel können organisch oder anorganisch, Farbstoffe oder Pigmente sein. Farbstoffe sind Farbmittel, die normalerweise kein Licht streuen, sondern sie absorbieren Licht bei einer bestimmten sichtbaren Wellenlänge. Farbstoffe sind oft in einer bestimmten Konzentration in der Polymermatrix löslich. Pigmente sind organische oder anorganische Farbstoffe, die in der Regel als diskrete, in der Polymermatrix unlösliche Teilchen vorliegen. Die Bezeichnung eines bestimmten Farbstoffs als Pigment oder Farbstoff hängt von der Polymermatrix, der Farbstoffkonzentration und Kristallinität, der Temperatur und anderen Faktoren ab. Hinsichtlich der vorliegenden Erfindung sind bevorzugte Farbmittel in der Polyamid-Formmasse in den Konzentrationen löslich, die zum Färben der Formteile erforderlich sind, wobei diese auch in Kombination mit Russ verwendet werden können.

Erfindungsgemäß werden Farbmittel in Mengen und in Kombinationen eingesetzt, die ausreichen, um die Formmassen schwarz und weitgehend undurchsichtig einzufärben. Die spezifische Menge eines verwendeten Farbmittels hängt unter anderem von seiner Löslichkeit und seinem Extinktionskoeffizienten in der thermoplastischen Matrix ab und davon, ob es in Kombination mit einem oder mehreren zusätzlichen Farbmitteln verwendet wird.

Der Anteil von Komponente c) liegt bevorzugt im Bereich von 0.05 bis 2.0 Gew.-%, bezogen auf die Summe der Komponenten a) bis d). Nach einer bevorzugten Ausführungsform der vorliegenden Erfindung liegt der Anteil von Komponente c) im Bereich von 0.08 bis 1.5 Gew.-% und besonders bevorzugt 0.10 bis 1.0 Gew.-%, jeweils bezogen auf die Summe der Komponenten a) bis d).

Geeignete Farbmittel weisen im Allgemeinen hohe Extinktionskoeffizienten im sichtbaren Wellenlängenbereich und eine hohe thermische Stabilität auf. Eine hohe thermische Stabilität der Farbmittel liegt dann vor, wenn keine signifikante Farbverschiebung oder thermischer Abbau bei der Herstellung und Verarbeitung der eingefärbten Formmassen durch Spritzguss oder Extrusion im Temperaturbereich zwischen 230 und 300 °C beobachtet werden. Darüber hinaus sollten die Farbmittel das Polymer nicht angreifen oder abbauen, was zu einem inakzeptablen Verlust der mechanischen Eigenschaften oder zur Bildung von gasförmigen Nebenprodukten während des Formens führen kann.

Synthetische Farbmittel werden typischerweise aus Steinkohlenteer oder Erdöl- Zwischenprodukten gewonnen. Für die Verwendung in thermoplastischen Kunststoffen sind Farbstoffe vieler verschiedener Typen verfügbar. Der Color-Index nennt viele verschiedene chemische Klassen von Farbstoffen, darunter z. B. Nitroso, Nitro, Monoazo, Diazo, Triazo, Polyazo, Azo, Stilben, Carotinoid, Diphenylmethan, Triarylmethan, Xanthen, Chinolin, Acridin, Methin, Thiazol, Indamin, Indophenol, Azin, Oxazin, Thiazin, Schwefel, Lacton, Aminoketon, Hydroxyketon, Anthrachinon, Indigloid und Phthalocyanin, Nigrosin, Ruß sowie anorganische Pigmente.

Bevorzugt werden Farbmittel oder Farbmittel-Kombination ausgewählt aus der Gruppe bestehend aus Pyrazolon-, Perinon- und Anthrachinon-, Methin-, Azo- und Cumarin- Farbstoffen und/oder metallhaltigen Pigmenten, wie anorganischen Pigmenten und die Metallkomplexen von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmitteln und können mit Russ ergänzt werden.

Beispiele für anorganische Pigmente sind Antimontrioxid, Antimonpentoxid, basisches Blei- carbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chromantimontitanat, Chromoxide, Eisenoxide, Kobaltblau, Kobaltchromblau, Kobaltnickelgrau, Manganblau, Manganviolett, Molybdatorange, Molybdatrot, Nickelantimontitanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb. Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin- oder Thiazinreihe.

Insbesondere bevorzugt ist das mindestens eine Farbmittel ausgewählt aus der Gruppe bestehend aus organischen Farbstoffen, insbesondere Anthrachinonfarbstoffen, Perinonfarbstoffen, Nigrosin, Ruß sowie Mischungen und Kombinationen hiervon.

Bevorzugt enthält das mindestens eine Farbmittel c) wenigstens ein nachfolgend genanntes Farbmittel und besonders bevorzugt ist das wenigstens eine Farbmittel c) ausgewählt aus der Gruppe der nachfolgend genannten Farbmitteln, im Folgenden angegeben als Color Index Generic Names (CIGN): Solvent Green 3 (CAS Nr. 128-80-3), Solvent Green 28 (CAS Nr. 28198-05-2), Solvent Red 52 (CAS Nr. 81-39-0), Solvent Red 111 (CAS Nr. 82-38-2), Solvent Red 135 (CAS Nr. 20749-68-2), Solvent Red 169 (CAS Nr. 27354-18-3), Solvent Red 179 (CAS Nr. 89106-94-5), Solvent Red 207 (CAS Nr. 10114-49-5), Disperse Red 22 (CAS Nr. 2944-28-7), Vat Red 41 (CAS Nr. 522-75-8), Solvent Orange 60 (CAS Nr. 61969-47-9), Solvent Orange 63 (CAS Nr. 16294-75-0), Solvent Violet 13 (CAS Nr. 81-48-1), Solvent Violet 14 (CAS Nr. 8005-40-1), Solvent Violet 50, Disperse Blue 73 (CAS Nr. 12222-78-5), Solvent Blue 97 (CAS Nr. CAS 61969-44-6), Solvent Blue 101 (CAS Nr. 6737-68-4), Solvent Blue 104 (CAS Nr. 116-75-6), Solvent Blue 138 (CAS Nr. 110157-96-5), Disperse Yellow 160 (CAS Nr. 75216-43-2), Solvent Yellow 84 (CAS Nr. 12239-76-8), Solvent Yellow 93 (CAS Nr. 4702-90-3), Solvent Yellow 98 (CAS Nr. 12671-74-8), Solvent Yellow 163 (CAS Nr. 13676-91-0), Solvent Yellow 160:1 (CAS Nr. 35773-43-4), und Mischungen davon. Diese Farbmittel weisen eine gute thermische Stabilität auf.

Bevorzugte Farbmittel mit Phthalocyaninstruktur sind beispielsweise Pigment Blue 15:1 (CAS Nr. 147-14-8), Pigment Blue 15:3 (CAS Nr. 147-14-8), Pigment Blue 16 (CAS Nr. 574-93-6) und Pigment Green 7 (CAS Nr. 1328-53-6).

Bevorzugt als Komponente c) werden weiterhin Solvent Brown 53 (CAS Nr. 64696-98-6), Pigment Brown 23 (CAS Nr. 35869-64-8), Pigment Brown 24 (CAS Nr. 68186-90-3), Pigment Brown 25 (CAS Nr. 6992-11-6), Pigment Orange 68 (CAS Nr. 42844-93-9), Solvent Orange 60 (CAS Nr. 61969-47-9), Solvent Orange 63 (CAS Nr. 16294-75-0) und Pigment Brown 6 (CAS Nr. 52357-70-7).

Besonders bevorzugte Farbstoffe sind Solvent Red 52, Solvent Red 135, Solvent Red 179, Solvent Violet 13, Solvent Violet 14, Solvent Violet 36, Solvent Violet 50, Disperse Blue 73, Solvent Yellow 93, Solvent Green 3, Disperse Yellow 160, Solvent Blue 97, sowie Mischungen, die mindestens einen der vorgenannten Farbstoffe enthalten.

Besonders bevorzugt werden die Farbmittel ausgewählt aus der Gruppe der folgenden Farbstoff-Mischungen:

- Solvent Green 3 und Solvent Red 179
- Solvent Red 52 und Solvent Blue 97
- Solvent Green 3, Solvent Blue 97 und Solvent Red 179
- Solvent Green 3, Solvent Red 52 und Solvent Red 179

wobei die Farbstoff-Mischungen zusätzlich Russ enthalten können. Bevorzugt enthalten die Farbstoff-Mischungen bis zu 50 Gew.-% Russ, bezogen auf die Farbstoff-Mischung. Besonders Bevorzugt enthalten die Farbstoff-Mischungen 20 - 50 Gew.-% Russ, bezogen auf die Farbstoff-Mischung.

Ganz besonders bevorzugt wird als Farbmittel eine Mischung aus den folgenden Komponenten:

20 - 40 Gew.-% Solvent Green 3
0-20 Gew.-% Solvent Red 52
15 - 35 Gew.-% Solvent Red 179
40 - 60 Gew.-% Russ

wobei die Summe der Komponenten 100 Gew.-% der Mischung (Komponente c) ergibt. Bevorzugt beträgt der Gehalt dieser Farbmittel-Mischung (c) 0.7 bis 0.8 Gew.-% bezogen auf die Summe der Komponenten a) bis d).

Bevorzugt werden Russsorten eingesetzt, die eine Partikelgrössenverteilung $d_{90}$ von < 200 nm aufweisen(dies bedeutet, dass mindestens 90 % der Partikel kleiner als 200 nm sind). Die Partikelgrössenverteilung kann z.B. Rastertransmissionselektronenmikroskopie (STEM) bestimmt werden. Derartige Russsorten sind beispielsweise Russ FW1 geperlt, Corax N115, Russ Black Pearls 1100, Russ Black Pearls 1150, oder Russ Black Pearls 880.

Die Anwesenheit eines Farbmittels, insbesondere im Rahmen der zuvor genannten Quantitäten und Qualitäten ermöglicht es, eine Polyamid-Formmasse auf Basis von transparenten Polyamiden bereitzustellen, die sich durch eine schwarze Klavierlackoptik auszeichnet.

**Zusatzstoffe (d)**

Die erfindungsgemäße Polyamid-Formmasse kann weiterhin z.B. von 0 bis 10 Gew.-% Zusatzstoffe (Komponente d)), bezogen auf die Summe der Komponenten a)bis d) beinhalten.

Nach einer bevorzugten Ausführungsform der vorliegenden Erfindung ist der Anteil von Komponente d) in der Polyamid-Formmasse im Bereich von 0 bis 5.0 Gew.-% und besonders bevorzugt 0.10 bis 2.0 Gew.-%, jeweils bezogen auf die Summe der Komponenten a) bis d).

Eine weitere bevorzugte Ausführungsform sieht vor, dass der mindestens eine Zusatzstoff d) ausgewählt ist aus der Gruppe bestehend aus Monomeren, insbesondere Lactamen, Weichmachern, Schlagzähmodifikatoren, Kondensationskatalysatoren, Kettenreglern, insbesondere monofunktionellen Carbonsäuren oder Aminen, Entschäumern, Antiblockmitteln, natürlichen Schichtsilikaten, synthetischen Schichtsilikaten, nanoskaligen Füllstoffen und Mischungen davon.

Aus der erfindungsgemäßen Polyamid-Formmasse lassen sich Formkörper herstellen, die insbesondere ausgewählt sind aus der Gruppe bestehend aus Innen- und Außenteile für Automobile, Motorräder, Campingfahrzeugen oder Wohnwagen, Gebäude- und Fassadenteile, dekorative Strukturrahmen, Bedienungsknöpfen oder -hebeln, Abdeckungen, Sichtflächen, hinter-leuchtete Komponenten, Blenden von Mobiltelefonen, Tablets, Gehäuse von elektronischen Geräten, Dekorteilen in Fahrzeugen, Haushalts-geräten, Behältern, Fahrzeugschlüsseln, Freizeit- und Outdoorartikeln.

Anhand der nachfolgenden Beispiele soll der erfindungsgemäße Gegenstand näher erläutert werden, ohne diesen auf die hier gezeigten spezifischen Ausführungsformen einschränken zu wollen. Im Rahmen dieser Anmeldung wurden die folgenden Messmethoden verwendet:

Haze, Transparenz

Transparenz und Haze wurden nach ASTM D1003-21 auf einem Messgerät Haze Gard Plus der Firma BYK Gardner an 2 mm dicken Platten (60 mm x 60 mm Oberfläche) mit CIE Lichtart C bei 23 °C gemessen.

Relative Viskosität, $\eta_{rel}$

Die relative Viskosität wurde gemäß ISO 307 (2007) bei 20 °C bestimmt. Dazu wurden 0.5 g Polymergranulat in 100 ml m-Kresol eingewogen, die Berechnung der relativen Viskosität (RV) nach RV = t/to erfolgte in Anlehnung an Abschnitt 11 der Norm.

Zug E-Modul

Die Bestimmung des Zug-E-Moduls und der Zugfestigkeit wurde gemäß ISO 527 (2012) bei 23°C mit einer Zuggeschwindigkeit von 1 mm/min an einem ISO-Zugstab (Typ A1, Maße 170 x 20/10 x 4) hergestellt gemäß der Norm: ISO/CD 3167 (2003), durchgeführt.

Streckspannung und Streckdehnung

Die Bestimmung von Streckspannung und Streckdehnung wurden gemäß ISO 527 (2012) bei 23°C mit einer Zuggeschwindigkeit von 50 mm/min an einem ISO-Zugstab, Typ A1 (Maße 170 x 20/10 x 4 mm), hergestellt gemäß der Norm ISO/CD 3167 (2003), durchgeführt.

Bruchspannung und Bruchdehnung

Die Bestimmung von Bruchspannung und Bruchdehnung wurden gemäß ISO 527 (2012) bei 23°C mit einer Zuggeschwindigkeit von 50 mm/min an einem ISO-Zugstab, Typ A1 (Maße 170 x 20/10 x 4 mm), hergestellt gemäß der Norm ISO/CD 3167 (2003), durchgeführt.

Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Maße 80 x 10 x 4 mm), hergestellt gemäß der Norm ISO/CD 3167 (2003), durchgeführt.

Kerbschlagzähigkeit nach Charpy

Die Bestimmung der Kerbschlagzähigkeit nach Charpy wurde gemäß ISO 179/2*eA (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

Glanz 60°

Der Glanz wurde an Platten der Dimension 60x60x2 mm mit einem Gerät des Typs Minolta Multi Gloss 268 unter einem Winkel von 60° und bei einer Temperatur von 23 °C nach ISO 2813 (2015) bestimmt. Der Glanzwert wird in dimensionslosen Glanzeinheiten (GU, gloss units) angegeben. Prüfkörper im trockenen Zustand wurden nach dem Spritzguss 48 h bei Raumtemperatur in trockener Umgebung, d.h. über Silicagel gelagert.

Konditionierung

Die Konditionierung wurde nach ISO 527 (2012) durchgeführt. Dabei werden die Prüfkörper 16 Stunden bei 23+-2°C und 50+-10% relativer Luftfeuchtigkeit gelagert.

Bruchenergie

Die Bruchenergie wird repräsentiert durch die Fläche unter der Kurve der Spannungs-Dehnungs-Kurve des Zugversuchs gemäß ISO 527 (2012).

Scheuerfestigkeit

Prüfgerät: Crockmeter gemäß DIN EN ISO 105-X12 oder ein anderes Prüfgerät, mit welchem die geforderten Prüfbedingungen eingestellt werden können (Prüfkraft: 9 N, Prüfweg: 104 $\pm$ 3 mm)

Prüfkopf: Reibzapfen C gemäß DIN 55654:2015

Prüfmittel/Reibmedium: Polierpapier gemäß DIN 55654:2015: Schleifkorn aus Aluminiumoxid, halboffene Streuung, Körnung 5 $\mu$m, Bindung der Körnung mit Vollkunstharz an flexibel extrudierten PES-Film (z. B. 3M™ 261X1)). Der Zuschnitt des Polierpapiers erfolgt auf eine exakte Breite von 25 mm und eine Mindestlänge von 75 mm.

Glanzmessgerät: Die Glanzmessung erfolgt mit einem Reflektometer (gemäß DIN EN ISO 2813:2015) unter einem Winkel von 20°
Probenvorbereitung: Für die Durchführung der Prüfung ist eine Probenmindestgröße von 150 mm x 100 mm erforderlich.

Die Konditionierung erfolgt wie voranstehend beschrieben.

Prüfungsdurchführung:

1. Konditionieren
2. Reinigung unter fließendem lauwarmem Wasser.)
3. Messen des Glanzgrades vor dem Kratzen. Die Glanzgradmessung erfolgt unter einem Messwinkel von 20°.
4. Reiben/Kratzen: Vor jedem Reibvorgang wird ein neues Reibmedium eingespannt. Ein Reibvorgang umfasst 5 Doppelhübe. Gerieben wird mit einer Last von 9 N. Falls die Reibspur nicht gleichmäßig ist (streifig, fleckig), muss eine Wiederholungsprüfung durchgeführt werden.
5. Nach dem Reiben werden die Proben 24 h bei Raumtemperatur gelagert. 6. Messen des Glanzes auf der Reibspur. Die Ausrichtung des Glanzmessgerätes hat dabei so zu erfolgen, dass die Messrichtung 90° zur Reibrichtung ist. Es ist darauf zu achten, dass die Messöffnung des Glanzmessgerätes auf der belasteten Fläche aufliegt. Die ersten und letzten 10 mm der Reibspur dürfen hierbei nicht gemessen werden.

Die Scheuerbeständigkeit wird als relative Glanzänderung (%) bezogen auf den Ausgangsglanzgrad ausgedrückt. Der Messwinkel beträgt 20°. Die relative Glanzänderung wird wie folgt berechnet:

$$(\text{Ausgangsglanzgrad - Glanzgrad nach Reiben}) \times 100 \,/\, \text{Ausgangsglanzgrad}$$

Die in den Beispielen und Vergleichsbeispielen verwendeten Materialien werden in Tabelle 1 zusammengefasst.

| Polyamid-1 (Polyamid X)<br>PA 6I/6T/MACMI/MACMT/PACMI/PACMT/12<br>(39/39/7.1/7.1/2.2/2.5/2.8) (Polyamid X), rel.<br>Viskosität = 1.62<br>Transparenz: 93%<br>Haze: 0.6 %<br>Tg: 159 °C | EMS Chemie AG |
|---|---|
| Polyamid-2 (Polyamid X)<br>PA 6I/6T/612/MACMI/MACMT/MACM12<br>(20/20/24/11/11/14), rel. Viskosität = 1.74<br>Transparenz: 93%<br>Haze: 0.3 %<br>Tg: 149 °C | EMS Chemie AG |
| Polyamid-3 (Polyamid X)<br>PA MACMI/MACMT/12 (31/30/39)<br>Transparenz: 93%<br>Haze: 0.6 %<br>Tg: 193 °C | EMS Chemie AG |
| Polyamid-4 (Polyamid Y)<br>PA 66 | RADIPOL A45, Radici<br>Group |
| Polyamid-5 (Polyamid Y)<br>PA 6 | EMS Chemie AG |
| Polyamid-6 (Vergleichsbeispiel)<br>PA 6I/6T | EMS Chemie AG |
| Polyamid-7 (Vergleichsbeispiel)<br>PA 66/6I/6T | EMS Chemie AG |
| Polyamid-8 (Vergleichsbeispiel)<br>PA 12 | EMS Chemie AG |
| IRGANOX 1098 (Komponente b) | N,N'-(Hexan-1,6-diyl)bis[3-(3,5-di-tert-butyl-4-hydroxyphenyl)propanamid] (BASF SE) (Additiv b)) |
| HOSTANOX PAR24 (Komponente b) | Tris(2,4-di-tert-butylphenyl)phosphit(ClariantAG) (Additiv b)) |
| TINUVIN 312/SANDUVOR VSU (Komponente b) | N-(2-Ethoxyphenyl)-N'-(2-ethylphenyl)oxamid (BASF SE bzw. Clariant AG)) |
| TINUVIN 770DF/LOWILITE 77 (Komponente b) | Bis(2,2,6,6-tetramethyl-4-piperidyl)sebacat (BASF AG bzw. Addivant)) |
| Calciumstearat (Komponente b) | FACI S.p.A., IT |
| Farbmittel (Komponente c)<br>Mischung aus: 47.0 Gew.-% RUSS BLACK<br>PEARLS 1100, 28.5 Gew.-% Macrolex Grün 5B<br>(Solvent Green 3; 61'565), 23.15 Gew.-% Macrolex Rot E2G<br>(Solvent Red 179; 564'150) und 1.35 Gew.-% Macrolex Rot 5B<br>(Solvent Red 52; 68'210) | Macrolex Farben von Lanxess, DE<br><br>Russ von Cabot, NL |

In den nachfolgenden Tabellen 2 und 4 sind erfindungsgemäße Polyamidformmassen (Beispiele), in Tabellen 3 und 5 nicht-erfindungsgemäßen Zusammensetzungen (Vergleichsbeispiele) und die jeweils bestimmten Messwerte angegeben. Die Gehaltsangaben sind in Gewichtsteilen vorgenommen.

Tabelle 2

| | Beispiel 1 | Beispiel 2 | Beispiel 3 | Beispiel 4 | Beispiel 5 | Beispiel 6 | Beispiel 7 | Beispiel 8 |
|---|---|---|---|---|---|---|---|---|
| Polyamid-2 | 48,929 | 48,929 | 24,466 | 24,466 | | | | |
| Polyamid-1 | | | | | 24,466 | 24,466 | 24,466 | |
| Polyamid-3 | | | | | | | | 24,775 |
| Polyamid-4 | 48,926 | | 73,389 | | | 73,389 | 58,712 | 74,325 |
| Polyamid-5 | | 48,926 | | 73,389 | 73,389 | | 14,678 | |
| Polyamid-6 | | | | | | | | |
| Polyamid-8 | | | | | | | | |
| Polyamid-7 | | | | | | | | |
| Farbmittel | 0,745 | 0,745 | 0,745 | 0,745 | 0,745 | 0,745 | 0,745 | 0,745 |
| CA-STEARAT | 0,5 | 0,5 | 0,5 | 0,5 | 0,5 | 0,5 | 0,5 | 0,5 |
| IRGANOX 1098 | 0,2 | 0,2 | 0,2 | 0,2 | 0,2 | 0,2 | 0,2 | 0,2 |
| HOSTANOX PAR24 | 0,2 | 0,2 | 0,2 | 0,2 | 0,2 | 0,2 | 0,2 | 0,2 |
| TINUVIN 312/SANDUVOR VSU | 0,2 | 0,2 | 0,2 | 0,2 | 0,2 | 0,2 | 0,2 | 0,2 |
| TINUVIN 770DF/LOWILITE 77 | 0,3 | 0,3 | 0,3 | 0,3 | 0,3 | 0,3 | 0,3 | 0,3 |

Tabelle 3

| | Vergleichs-beispiel 1 | Vergleichs-beispiel 2 | Vergleichs-beispiel 3 | Vergleichs-beispiel 4 | Vergleichs-beispiel 5 | Vergleichs-beispiel 6 |
|---|---|---|---|---|---|---|
| Polyamid-2 | | | | | | |
| Polyamid-1 | 73,392 | 48,929 | 24,463 | 73,392 | 73,392 | 73,392 |
| Polyamid-3 | | | | | | |
| Polyamid-4 | | | | 24,463 | | 19,570 |
| Polyamid-5 | | | | | 24,463 | 4,893 |
| Polyamid-6 | | | | | | |
| Polyamid-8 | 24,463 | 48,926 | 73,392 | | | |
| Polyamid-7 | | | | | | |
| Farbmittel | 0,745 | 0,745 | 0,745 | 0,745 | 0,745 | 0,745 |
| Ca-Stearat | 0,5 | 0,5 | 0,5 | 0,5 | 0,5 | 0,5 |
| IRGANOX 1098 | 0,2 | 0,2 | 0,2 | 0,2 | 0,2 | 0,2 |
| HOSTANOX PAR24 | 0,2 | 0,2 | 0,2 | 0,2 | 0,2 | 0,2 |
| TINUVIN 312/SANDUVOR VSU | 0,2 | 0,2 | 0,2 | 0,2 | 0,2 | 0,2 |
| TINUVIN 770DF/LOWILITE 77 | 0,3 | 0,3 | 0,3 | 0,3 | 0,3 | 0,3 |

Tabelle 3 (Fortsetzung)

| | Vergleichs-beispiel 7 | Vergleichs-beispiel 8 | Vergleichs-beispiel 9 |
|---|---|---|---|
| Polyamid-2 | | | |
| Polyamid-1 | | 24,466 | 97,855 |
| Polyamid-3 | | | |
| Polyamid-4 | 73,389 | | |
| Polyamid-5 | | | |
| Polyamid-6 | 24,466 | | |
| Polyamid-8 | | | |
| Polyamid-7 | | 73,389 | |
| Farbmittel | 0,745 | 0,745 | 0,745 |
| Ca-Stearat | 0,5 | 0,5 | 0,5 |
| IRGANOX 1098 | 0,2 | 0,2 | 0,2 |
| HOSTANOX PAR24 | 0,2 | 0,2 | 0,2 |
| TINUVIN 312/SANDUVOR VSU | 0,2 | 0,2 | 0,2 |
| TINUVIN 770DF/LOWILITE 77 | 0,3 | 0,3 | 0,3 |

Die mit den Zusammensetzungen der erfindungsgemäßen Beispiele 1 bis 8 sowie den Vergleichsbeispielen 1 bis 9 erhaltenen Messwerte sind in den nachfolgenden Tabellen 4 und 5 angegeben.

Tabelle 4

| Messgröße [Maß-einheit] | Mess bedingung | Konditio-nierung | Beispiel 1 | Beispiel 2 | Beispiel 3 | Beispiel 4 | Beispiel 5 |
|---|---|---|---|---|---|---|---|
| Zug-E-Modul [MPa] | 23°C, 50mm/min | konditioniert | 2108 | 1736 | 1718 | 1119 | 1656 |
| Streckspannung [MPa] | 23°C, 50mm/min | konditioniert | 68,9 | 60,5 | 59,6 | 46,8 | 79,6 |
| Streckdehnung [%] | 23°C, 50mm/min | konditioniert | 6,5 | 6,6 | 12,4 | 16,0 | 8,8 |
| Bruchspannung [MPa] | 23°C, 50mm/min | konditioniert | 51,9 | 67,7 | 51,2 | 66,1 | 63,3 |
| Bruchdehnung [%] | 23°C, 50mm/min | konditioniert | 172,4 | 212 | 188,2 | 256 | 311,5 |
| Bruchenergie [J] | 23°C, 50mm/min | konditioniert | 255,6 | 302,7 | 271,2 | 355,2 | 387,4 |
| Schlagzähigkeit [kJ/m²] | 23 °C | konditioniert | OB | OB | OB | OB | OB |
| Kerbschlagzähigkeit [kJ/m²] | 23 °C | konditioniert | 9,2 | 13,9 | 9,3 | 26,0 | 17,6 |
| Optische Beurtei-lung Farbplätt-chen | mit dem blossen Auge | trocken | Grauschleier | Grauschleier | Grauschleier | Grauschleier | Piano Black |
| Glanz 20° | Ausgangsglanz-grad (AG; unbe-handelte Platte) | trocken | 93 | 88 | 90 | 68 | 88 |
| Glanz 20° | Glanzgrad nach Reiben (GnR; Kratzfläche) | trocken | 12 | 13 | 12 | 14 | 78 |
| Prozentuale Abnahme Glanz 20° | | trocken | 87 | 85 | 87 | 79 | 11 |

OB: ohne Bruch

Tabelle 4 (Fortsetzung)

| Messgröße [Maß-einheit] | Mess bedingung | Konditio-nierung | Beispiel 6 | Beispiel 7 | Beispiel 8 |
|---|---|---|---|---|---|
| Zug-E-Modul [MPa] | 23°C, 50mm/min | konditioniert | 2520 | 1955 | 1603 |
| Streckspannung [MPa] | 23°C, 50mm/min | konditioniert | 64 | 53,2 | 57,1 |
| Streckdehnung [%] | 23°C, 50mm/min | konditioniert | 4,5 | 6,2 | 14,1 |
| Bruchspannung [MPa] | 23°C, 50mm/min | konditioniert | 51,4 | 56,9 | 52,5 |
| Bruchdehnung [%] | 23°C, 50mm/min | konditioniert | 268,8 | 281,4 | 158,5 |
| Bruchenergie [J] | 23°C, 50mm/min | konditioniert | 386,5 | 382,5 | 242,8 |
| Schlagzähigkeit [kJ/m²] | 23 °C | konditioniert | OB | OB | OB |
| Kerbschlagzähig-keit [kJ/m²] | 23 °C | konditioniert | 9,2 | 10,7 | 13,7 |
| Optische Beurtei-lung Farbplätt-chen | mit dem blossen Auge | trocken | Piano Black | Piano Black | Piano Black |
| Glanz 20° | Ausgangsglanz-grad (AG; unbe-handelte Platte) | trocken | 92 | 92 | 95 |
| Glanz 20° | Glanzgrad nach Reiben (GnR; Kratzfläche) | trocken | 70 | 77 | 22 |
| Prozentuale Abnahme Glanz 20° | | trocken | 24 | 16 | 77 |

OB: ohne Bruch

Tabelle 5

| Messgröße [Maßeinheit] | Mess bedingung | Konditionierung | Vergleichsbeispiel 1 | Vergleichsbeispiel 2 | Vergleichsbeispiel 3 | Vergleichsbeispiel 4 | Vergleichsbeispiel 5 |
|---|---|---|---|---|---|---|---|
| Zug-E-Modul [MPa] | 23°C, 50mm/min | konditioniert | 2383 | 1782 | 1367 | 2977 | 2992 |
| Streckspannung [MPa] | 23°C, 50mm/min | konditioniert | 77,8 | 53,8 | 45,9 | 87,3 | 87,7 |
| Streckdehnung [%] | 23°C, 50mm/min | konditioniert | 5,7 | 7,3 | 9,5 | 5 | 4,7 |
| Bruchspannung [MPa] | 23°C, 50mm/min | konditioniert | 47,5 | 52,4 | 36,2 | 45,3 | 42,1 |
| Bruchdehnung [%] | 23°C, 50mm/min | konditioniert | 35,8 | 9,5 | 54 | 29 | 13,3 |
| Bruchenergie [J] | 23°C, 50mm/min | konditioniert | 58,9 | 12,5 | 61,8 | 47,8 | 22,3 |
| Schlagzähigkeit [kJ/m$^2$] | 23 °C | konditioniert | 40% OB/ 60% 244 | 109,7 | OB | 80% OB/ 20% 92 | 60% OB/ 40% 282 |
| Kerbschlagzähigkeit [kJ/m$^2$ | 23 °C | konditioniert | 9,6 | 4,2 | 4,4 | 8,8 | 8,6 |
| Optische Beurteilung Farbplättchen | mit dem blossen Auge | trocken | Schlieren/ Grauschleier | Grauschleier/ Flecken | Grauschleier/ Flecken | Piano Black | Piano Black |
| Glanz 20° | Ausgangsglanzgrad (AG; unbehandelte Platte) | trocken | 96 | 86 | 50 | 100 | 100 |
| Glanz 20° | Glanzgrad nach Reiben (GnR; Kratzfläche) | trocken | 28 | 18 | 6 | 18 | 13 |
| Prozentuale Abnahme Glanz 20° | | trocken | 71 | 79 | 88 | 82 | 87 |
| OB: ohne Bruch | | | | | | | |

Tabelle 5 (Fortsetzung)

| Messgröße [Maßeinheit] | Mess bedingung | Konditionierung | Vergleichsbeispiel 6 | Vergleichsbeispiel 7 | Vergleichsbeispiel 8 | Vergleichsbeispiel 9 |
|---|---|---|---|---|---|---|
| Zug-E-Modul [MPa] | 23°C, 50mm/min | konditioniert | 2998 | 2960 | 2915 | 2889,0 |

Tabelle 5 (Fortsetzung)

| Messgröße [Maßeinheit] | Mess bedingung | Konditionierung | Vergleichsbeispiel 6 | Vergleichsbeispiel 7 | Vergleichsbeispiel 8 | Vergleichsbeispiel 9 |
|---|---|---|---|---|---|---|
| Streckspannung [MPa] | 23°C, 50mm/min | konditioniert | 89,8 | 71,9 | 75,1 | 95,8 |
| Streckdehnung [%] | 23°C, 50mm/min | konditioniert | 5,2 | 4 | 4,1 | 5,8 |
| Bruchspannung [MPa] | 23°C, 50mm/min | konditioniert | 47,5 | 43,2 | 41,8 | 56,5 |
| Bruchdehnung [%] | 23°C, 50mm/min | konditioniert | 42,2 | 110,2 | 24,5 | 73,4 |
| Bruchenergie [J] | 23°C, 50mm/min | konditioniert | 68,6 | 167,7 | 40,8 | 133,8 |
| Schlagzähigkeit [kJ/m$^2$] | 23 °C | konditioniert | OB | OB | OB | OB |
| Kerbschlagzähigkeit [kJ/m$^2$ | 23 °C | konditioniert | 8,3 | 6,3 | 9,7 | 9,9 |
| Optische Beurteilung Farbplättchen | mit dem blossen Auge | trocken | Piano Black | Piano Black | Grauschleier | Piano Black |
| Glanz 20° | Ausgangsglanzgrad (AG; unbehandelte Platte) | trocken | 101 | 91 | 53 | 105 |
| Glanz 20° | Glanzgrad nach Reiben (GnR; Kratzfläche) | trocken | 20 | 1 | 8 | 19 |
| Prozentuale Abnahme Glanz 20° | | trocken | 80 | 99 | 85 | 82 |
| OB: ohne Bruch | | | | | | |

EP 4 253 479 A1

18

Wie aus den Beispielen ersichtlich ist, bedarf es seiner spezifischen Kombination der Polyamide X und Y um eine hohen Wert der Bruchenergie zu erzielen. Gleichzeitig kann nicht nur eine gewünschte Optik ("Piano Black") erzielt werden, völlig überraschenderweise kann dadurch auch die Scheuerfestigkeit erhöht werden.

**Patentansprüche**

1.  Polyamid-Formmasse enthaltend die folgenden Komponenten oder bevorzugt bestehend aus den folgenden Komponenten:

    a)

       93.0 bis 99.9 Gew.-% einer Mischung M bestehend aus
       15.0 bis 50.0 Gew.-% mindestens einem Polyamid X und
       50.0 bis 85.0 Gew.-% mindestens einem Polyamid Y, ausgewählt aus der Gruppe bestehend aus PA6, PA66, PA6/66, PA610, PA612, PA 614, PA 616, PA 6/12 sowie Mischungen hiervon;

       b) 0.05 bis 5.0 Gew.-% mindestens eines Additivs;
       c) 0.01 bis 2.0 Gew.-% mindestens eines Farbmittels;
       d) ggf. von den Komponenten a) bis c) verschiedene Zusatzstoffe;
       wobei das mindestens eine Polyamid X ausgewählt ist aus der Gruppe bestehend aus Polyamiden, die zumindest die von den Monomer-Einheiten A, B, C, D und/oder E abgeleiteten, amidisch gebundenen Polyamid-Einheiten AC, BC und E, oder AC, BC, AD und BD, oder AC und E umfassen, wobei die Monomer-Einheiten A, B, C, D und E die nachfolgende Definitionen haben:

       A: mindestens ein cycloaliphatisches Diamin;
       B: mindestens ein acyclisch aliphatisches Diamin;
       C: mindestens eine aromatische Dicarbonsäure;
       D: mindestens eine aliphatische Dicarbonsäure;
       E: mindestens eine $\alpha,\omega$-Aminocarbonsäure bzw. mindestens ein Lactam;

       wobei die Summe der Komponenten X und Y 100 Gew.-% der Mischung M und die Summe der Komponenten a), b), c) und d) 100 Gew.-% ergeben.

2.  Polyamid-Formmasse nach Anspruch 1, **dadurch gekennzeichnet, dass** das mindestens eine Additiv (b) zu 0.10 bis 3.0 Gew.-% beinhaltet ist und/oder

    das mindestens eine Farbmittel (c) zu 0.05 bis 2.0 Gew.-% beinhaltet ist
    und/oder
    0 bis 5.0 Gew.-% Zusatzstoffe (d) enthalten sind.

3.  Polyamid nach einem der vorhergehenden Ansprüche, **dadurch gekennzeichnet, dass** die Monomer-Einheiten A bis E jeweils unabhängig voneinander ausgewählt sind aus der Gruppe bestehend aus

    A: die cycloaliphatischen Diamine sind ausgewählt aus der Gruppe bestehend aus Bis-(4-amino-3-methyl-cyclohexyl)-methan (MACM), Bis(4-amino-cyclohexyl)methan (PACM), Bis-(4-amino-3,5-dimethyl-cyclohexyl)-methan (TMDC) und Mischungen hiervon;
    B: die acyclisch aliphatischen Diamine sind ausgewählt aus der Gruppe bestehend aus 1,6-Hexandiamin, 2-Methyl-1,8-Octandiamin, 1,9-Nonandiamin, 1,10-Decandiamin, 1,12-Dodecandiamin, bevorzugt ausgewählt sind aus 1,6-Hexandiamin und 1,10-Decandiamin;
    C: die aromatischen Dicarbonsäuren sind ausgewählt aus der Gruppe bestehend aus Terephthalsäure, Isophthalsäure und Mischungen davon, bevorzugt ausgewählt sind als Mischung aus Terephthalsäure und Isophthalsäure;
    D: die aliphatischen Dicarbonsäuren sind ausgewählt aus der Gruppe bestehend aus Adipinsäure, Azelainsäure, 1,10-Decandisäure, 1,12-Dodecandisäure, 1,14-Tetradecandisäure, 1,16-Hexadecandisäure, Cyclohexan-1,3-dicarbonsäure, Cyclohexan-1,4-dicarbonsäure und Mischungen hiervon;
    E: die $\alpha,\omega$-Aminocarbonsäuren oder die Lactame sind ausgewählt aus der Gruppe bestehend aus $\alpha,\omega$-Amino-hexansäure, $\alpha,\omega$-Aminoundecansäure, $\alpha,\omega$-Aminododecansäure, Caprolactam, Laurinlactam sowie Mischungen daraus.

4. Polyamid nach einem der vorhergehenden Ansprüche, **dadurch gekennzeichnet, dass** die Polyamid-Einheit AC mindestens zwei verschiedene, bevorzugt genau zwei verschiedene cycloaliphatische Diamine umfasst, insbesondere Bis-(4-amino-3-methyl-cyclohexyl)-methan (MACM) und Bis(4-amino-cyclohexyl)methan (PACM).

5. Polyamid-Formmasse nach einem der vorhergehenden Ansprüche, **dadurch gekennzeichnet, dass** die Mischung M aus

   15.0 bis 45.0 Gew.-%, bevorzugt 20.0 bis 42.0 Gew.-%, besonders bevorzugt 25.0 bis 38.0 Gew.-% des mindestens einen Polyamids X und
   55.0 bis 85.0 Gew.-%, bevorzugt 58.0 bis 80.0 Gew.-%, besonders bevorzugt 62.0 bis 75.0 Gew.-% des mindestens einen Polyamids Y;
   besteht.

6. Polyamid-Formmasse nach einem der vorhergehenden Ansprüche, **dadurch gekennzeichnet, dass** das Polyamid X mehr als 30 Mol %, bevorzugt mehr als 40 Mol-%, insbesondere mehr als 42 Mol-%, besonders bevorzugt im Bereich von 30 bis 50 Mol-% oder 40 bis 50 Mol-% oder 42 bis 50 Mol-% an Monomeren mit aromatischen Struktureinheiten, bezogen auf die Gesamtmenge an Monomeren, enthält.

7. Polyamid-Formmasse nach einem der vorhergehenden Ansprüche, **dadurch gekennzeichnet, dass** das Polyamid X ausgewählt ist aus der Gruppe bestehend aus PA 6I/6T/MACMI/MACMT/PACMI/PACMT/12, PA 6I/6T/MACMI/MACMT/MACM12/612, PA MACMI/12, PA MACMT/12, PA 10I/MACMI/MACM10/1010, PA 10T/MACMT/-MACM10/1010, PA 10I/10T/MACMI/MAMT/MACM10/1010 PA MACMI/MACMT, PA MACMI/MACMT/12, PA MACMI/MACMT/- MACM12, PA 6I/6T/MACMI/MACMT, PA 6I/6T/MACMI/MACMT/12, PA 6I/612/MACMI/MACM12, PA 6T/612/MACMT/MACM12, PA 6I/6T/612/MACMI/MACMT/MACM12, PA 6I/6T/MACMI/MACMT/- PACMI/PACMT/MACM12/PACM12 und Mischungen hiervon.

8. Polyamid-Formmasse nach einem der vorhergehenden Ansprüche, **dadurch gekennzeichnet, dass** das Polyamid X
   eine Transparenz von mindestens 88% und einen Haze von höchstens 5%, jeweils bestimmt gemäss ASTM-D1003-21 an einer Platte der Dimension 60 x 60 x 2 mm, aufweist.

9. Polyamid-Formmasse nach einem der vorhergehenden Ansprüche, **dadurch gekennzeichnet, dass** das Farbmittel (c) ausgewählt ist aus der Gruppe bestehend aus organischen Farbstoffen, insbesondere Anthrachinonfarbstoffen, Perinonfarbstoffen, Nigrosin, Ruß sowie Mischungen und Kombinationen hiervon.

10. Polyamid-Formmasse nach einem der vorhergehenden Ansprüche, **dadurch gekennzeichnet, dass** das Farbmittel (c) aus Russ, Solvent Green 3; Solvent Red 179 und Solvent Red 52 besteht.

11. Polyamid-Formmasse nach einem der vorhergehenden Ansprüche, **dadurch gekennzeichnet, dass** das mindestens eine Additiv (b) ausgewählt ist aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern Gleitmitteln, Entformungsmitteln sowie Mischungen und Kombinationen hiervon.

12. Polyamid-Formmasse nach einem der vorhergehenden Ansprüche, **dadurch gekennzeichnet, dass** mindestens ein sich von den Additiven b) und den Farbmitteln c) unterscheidender Zusatzstoff, ausgewählt aus der Gruppe bestehend aus Weichmachern, Schlagzähmodifikatoren, Kondensationskatalysatoren, Kettenreglern, insbesondere monofunktionelle Carbonsäuren oder Aminen, Entschäumern, Antiblockmitteln, natürlichen Schichtsilikaten, synthetischen Schichtsilikaten, nanoskaligen Füllstoffen und Mischungen davon, enthalten ist.

13. Formkörper enthaltend eine Polyamid-Formmasse oder bevorzugt bestehend aus einer Polyamid-Formmasse nach einem der Ansprüche 1 bis 12, insbesondere ausgewählt aus der Gruppe bestehend aus Innen- und Außenteile für Automobile, Motorräder, Campingfahrzeugen oder Wohnwagen, Gebäude- und Fassadenteile, dekorative Strukturrahmen, Bedienungsknöpfen oder -hebeln, Abdeckungen, Sichtflächen, hinterleuchtete Komponenten, Blenden von Mobiltelefonen, Tablets, Gehäuse von elektronischen Geräten, Dekorteilen in Fahrzeugen, Haushaltsgeräten, Behältern, Fahrzeugschlüsseln, Freizeit- und Outdoorartikeln.

Europäisches
Patentamt

European
Patent Office

Office européen
des brevets

# EUROPÄISCHER RECHERCHENBERICHT

**Nummer der Anmeldung**

**EP 22 16 5144**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 942 296 A1 (EMS CHEMIE AG [CH]) 9. Juli 2008 (2008-07-09) | 1-9, 11-13 | INV. C08L77/02 |
| A | * Seite 11; Beispiel 1 * | 10 | C08L77/06 |
| | ----- | | |
| X | US 2021/032466 A1 (STÖPPELMANN GEORG [CH]) 4. Februar 2021 (2021-02-04) | 1-9, 11-13 | |
| A | * Seite 8; Beispiel E2 * * Absätze [0080], [0097], [0100] * * Anspruch 24 * | 10 | |
| | ----- | | |

**RECHERCHIERTE SACHGEBIETE (IPC)**

C08L

Der vorliegende Recherchenbericht wurde für alle Patentansprüche erstellt

| Recherchenort | Abschlußdatum der Recherche | Prüfer |
|---|---|---|
| München | 18. August 2022 | Wohnhaas, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

---

**EP 4 253 479 A1**

**ANHANG ZUM EUROPÄISCHEN RECHERCHENBERICHT
ÜBER DIE EUROPÄISCHE PATENTANMELDUNG NR.**                EP 22 16 5144

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2022

| Im Recherchenbericht angeführtes Patentdokument | Datum der Veröffentlichung | Mitglied(er) der Patentfamilie | Datum der Veröffentlichung |
|---|---|---|---|
| EP 1942296 A1 | 09-07-2008 | EP 1942296 A1 | 09-07-2008 |
| | | ES 2533868 T3 | 15-04-2015 |
| US 2021032466 A1 | 04-02-2021 | EP 3502189 A1 | 26-06-2019 |
| | | EP 3728473 A1 | 28-10-2020 |
| | | US 2021032466 A1 | 04-02-2021 |
| | | WO 2019121457 A1 | 27-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1930373 A2
- EP 3336131 A1
- EP 3450481 A1
- EP 3502164 A1
- EP 3502191 A1
- EP 2055743 A1